(19) 
**Europäisches Patentamt**
**European Patent Office**
**Office européen des brevets**

(11) **EP 1 719 195 B1**

(12) **EUROPEAN PATENT SPECIFICATION**

(45) Date of publication and mention of the grant of the patent:
**17.06.2009 Bulletin 2009/25**

(51) Int Cl.:
*H01M 4/32* (2006.01)  *H01M 4/48* (2006.01)
*H01M 4/52* (2006.01)

(21) Application number: **05705081.7**

(22) Date of filing: **06.01.2005**

(86) International application number:
**PCT/US2005/000282**

(87) International publication number:
**WO 2005/070039 (04.08.2005 Gazette 2005/31)**

(54) **POSITIVE ELECTRODE ACTIVE MATERIAL FOR A NICKEL ELECTRODE**

POSITIV-ELEKTRODEN-AKTIVMATERIAL FÜR EINE NICKELELEKTRODE

MATERIAU ACTIF D'ELECTRODE POSITIVE POUR ELECTRODE DE NICKEL

(84) Designated Contracting States:
**DE FR GB IT**

(30) Priority: **08.01.2004 US 535176 P**

(43) Date of publication of application:
**08.11.2006 Bulletin 2006/45**

(73) Proprietor: **Ovonic Battery Company, Inc.**
**Rochester Hills,**
**Michigan 48309 (US)**

(72) Inventors:
• **FETCENKO, Michael, A.**
**Rochester, MI 48307 (US)**

• **FIERRO, Cristian**
**Northville, MI 48167 (US)**
• **ZALLEN, Avram**
**West Bloomfield, MI 48323 (US)**

(74) Representative: **Pautex Schneider, Nicole Véronique et al**
**Novagraaf International SA**
**25, Avenue du Pailly**
**1220 Les Avanchets - Geneva (CH)**

(56) References cited:
**WO-A-02/07238**       **WO-A-03/003498**
**US-A- 6 033 805**     **US-A- 6 110 620**
**US-B1- 6 447 953**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Cross Reference to Related Application

The present application is entitled to the benefit of the earlier filing date and priority of, co-pending U.S. Patent Application S.N. 60/535,176, which is assigned to the same assignee as the current application, entitled "Positive Active Material For A Nickel Electrode," filed January 8, 2004, the disclosure of which is hereby incorporated by reference.

### Field of the Invention

The present invention relates to nickel hydroxide materials suitable for use as an active material in an electrochemical cell, such as a nickel metal hydride battery.

### Background

Nickel hydroxide has been used for years as an active material for the positive electrode of alkaline electrochemical cells. Examples of such nickel-based alkaline cells include nickel cadmium (Ni-Cd) cells, nickel-iron (Ni-Fe) cells, nickel-zinc (Ni-Zn) cells, and nickel-metal hydride (Ni-MH) cells. The use of nickel hydroxide as a positive electrode active material for nickel metal hydride batteries is generally known and has been disclosed in numerous U.S. patents. See for example, U.S. Patent No. 5,523,182, issued June 4, 1996 to Ovshinsky et al., entitled "Enhanced Nickel Hydroxide Positive Electrode Materials For Alkaline Rechargeable Electrochemical Cells," the disclosure of which is hereby incorporated by reference. In U.S. 5,523,182, Ovshinsky et al. describes a positive electrode material comprising particles of nickel hydroxide positive electrode material and a precursor coating of a substantially continuous, uniform encapsulant layer formed on the active material to increase performance.

Several forms of positive electrodes exist at present and include: sintered, foamed, and pasted type electrodes. Sintered positive electrodes may be prepared by applying a nickel powder slurry to a nickel-plated, steel base followed by sintering at high temperatures. This process causes the individual particles of nickel to weld at their points of contact, resulting in a porous material that is approximately 80% open volume and 20% solid metal. The sintered material is then impregnated with active material by soaking it in an acidic nickel salt solution, followed by conversion to nickel hydroxide in a reaction with alkali metal hydroxide. After impregnation, the material is subjected to electrochemical formation. Foamed and pasted electrodes are prepared by a different process. Foamed and pasted electrodes may be made by depositing nickel hydroxide particles onto a conductive network or substrate. Often, various powders, such as binders and conductive additives are mixed with the nickel hydroxide particles to improve electrode performance.

In general, nickel-metal hydride (Ni-MH) cells utilize positive electrode comprising a nickel hydroxide active material and a negative electrode comprising a metal hydride active material that is capable of the reversible electrochemical storage of hydrogen. Examples of metal hydride materials are provided in U.S. Patent Nos. 4,551,400, 4,728,586, and 5,536,591 the disclosures of which are incorporated by reference herein. The negative and positive electrodes are spaced apart in the alkaline electrolyte.

Upon application of an electrical current across a Ni-MH cell, the Ni-MH material of the negative electrode is charged by the absorption of hydrogen formed by electrochemical water discharge reaction and the electrochemical generation of hydroxyl ions:

$$\text{M} + \text{H}_2\text{O} + \text{e-} \; \overset{\text{charge}}{\underset{\text{discharge}}{\longleftrightarrow}} \; \text{MH} + \text{OH}^- \qquad (1)$$

The negative electrode reactions are reversible. Upon discharge, the stored hydrogen is released to form a water molecule and release an electron.

The charging process for a nickel hydroxide positive electrode in an alkaline electrochemical cell is governed by the following reaction:

$$\text{charge}$$
$$\text{Ni(OH)}_2 + \text{OH-} \longleftrightarrow \text{NiOOH} + \text{H}_2\text{O} + \text{e-} \qquad (2)$$
$$\text{discharge}$$

After the first charge of the electrochemical cell, the nickel hydroxide is oxidized to form nickel oxyhydroxide. During discharge of the electrochemical cell, the nickel oxyhydroxide is reduced to form beta nickel hydroxide as shown by the following reaction:

$$\text{discharge}$$
$$\text{NiOOH} + \text{H}_2\text{O} + \text{e}^- \longleftrightarrow \beta\text{-Ni(OH)}_2 + \text{OH}^- \quad (3)$$
$$\text{charge}$$

Rechargeable batteries, namely nickel metal hydride batteries, with high energy density, high capacity, and a long cycle life are highly desirable. The recent trend for portable devices has increased the needs and requirements for high energy density and high power density rechargeable batteries. High energy density and high power density are also important criteria for batteries used for electric or hybrid vehicles. Despite a number of electrodes and active materials already being in existence, there continues to be a need for improvements in capacity and cost for positive electrodes used in nickel metal hydride batteries.

## Summary of the Invention

Disclosed herein is a nickel hydroxide material for the positive electrode of an electrochemical cell including one or more modifier elements selected from copper, zinc, cobalt, and magnesium which provide the nickel hydroxide material with a crystallite size of less than 100 angstroms. The modifier elements may also provide the nickel hydroxide material with a tap density in the range of 2.00 to 2.35 and/or an average particle size based on volume of 5 to 25 $\mu$m.
The nickel hydroxide material generally includes nickel, copper and one or more of cobalt, zinc, and magnesium. Nickel may be present in the range of 89.0 to 95.0 atomic percent of the metal components, preferably in the range of 92.0 to 95.0 atomic percent of the metal components. Copper may be preferably in the range of 0.5 to 5.0 atomic percent of the metal components, preferably in the range of 0.5 to 3.5 atomic percent of the metal components, and most preferably in the range of 2.5 to 3.5 atomic percent of the metal components. Cobalt is be present in the range of 2 to 4 atomic percent of the metal components.
Zinc is present in the range of 0.5 to 5.5 atomic percent of the metal components, preferably in the range of 0.5 to 2.5 atomic percent of the metal components. Magnesium is present in the range of 0.0 to 5.5 atomic percent of the metal components, preferably the range of 0.0 to 1.5 atomic percent of the metal components.
The nickel hydroxide material may have a tap density of 2.00 to 2.35 g/cc, preferably in the range of 2.20 to 2.35 g/cc. The nickel hydroxide material may have an average particle size based on volume of 5 to 25 $\mu$m. The positive electrode active material may have a BET surface area of 5-30 m$^2$/g.

## Detailed Description of the Preferred Embodiments of the Invention

The present invention provides a nickel hydroxide material for an electrochemical cell including copper. The copper is preferably formed in a nickel hydroxide matrix. The copper may substitute for nickel in the nickel hydroxide lattice structure, may be found between the plates within the nickel hydroxide, may form a solid solution with nickel hydroxide, or may be disposed adjacent to the nickel hydroxide crystals. The copper may be in the form of a hydroxide. The copper may be present in an amount up to 5.0 atomic percent of the total metal content of the nickel hydroxide material. Preferably, copper is in the range of 0.5 to 3.5 atomic percent of the total metal content of the nickel hydroxide material. Most preferably, the copper is 2.5 to 3.5 atomic percent of the total metal content of the nickel hydroxide material. A preferred nickel hydroxide material may consist essentially of nickel hydroxide, cobalt hydroxide, zinc hydroxide, copper hydroxide, and magnesium hydroxide.
The nickel hydroxide material includes copper and cobalt, zinc, and optionally magnesium. The atomic ratio in percent of the metal component of the nickel hydroxide is expressed herein. Nickel is in the range of 89.0 to 95.0 atomic percent. Cobalt is in the range of 2.0 to 4.0 atomic percent. Zinc is in the range of 0.5 to 5.5 atomic percent. Magnesium is preferably in the range of 0.0 to 1.5 atomic percent. Another preferred nickel hydroxide material is characterized by the formula consisting essentially of $(Ni_aCO_bZn_cCu_dMg_e)(OH)_2$ wherein $0.920 \leq a \leq 0.950$; $0.020 < b \leq 0.040$; $0.005 < c \leq 0.025$; $0.005 < d \leq 0.025$; where $a+b+c+d+e = 1.000$. Another preferred nickel hydroxide material is characterized by the formula consisting essentially of $(Ni_aCo_bZn_cCu_dMg_e)(OH)_2$ wherein $0.920 \leq a \leq 0.950$; $0.020 < b \leq 0.040$; $0.005 < c \leq 0.025$; $0.005 < d \leq 0.025$; $0.000 < e \leq 0.015$; where $a+b+c+d+e = 1.000$.

A preferred nickel hydroxide material has less than 0.05 wt% calcium. A pref erred nickel hydroxide material has less than 0.05 wt% cadmium. A preferred nickel hydroxide material has less than 0.05 wt% manganese. A preferred nickel hydroxide material has less than 0.5 wt% sodium. A most preferred nickel hydroxide material has less than 0.05 wt% sodium.

While not wishing to be bound by theory, the present inventors believe that by including copper and one or more of cobalt, zinc, and magnesium into the nickel hydroxide material, it is possible to decrease the crystallite size of the nickel hydroxide particles thereby increasing the full width half maximum (FWHM) of the <101> X-ray peak, which is indicative of high capacity for nickel hydroxide. While increasing capacity of the nickel hydroxide material, the tap density, particle size, and/or BET surface area of the nickel hydroxide material are not adversely affected.

The nickel hydroxide has a crystallite size of less than 100 angstroms, more preferably less than 90 angstroms, and most preferably less than 80 angstroms as measured in the direction of the <101> plane and the <001> plane. The nickel hydroxide material exhibits a FWHM (full width half maximum) at the <101> peak in the range of 0.90 to 1.25 under standard X-Ray Diffraction characterization. Preferably, the nickel hydroxide material exhibits a FWHM at the <101> peak in the range of 1.15 to 1.25 under standard X-Ray Diffraction characterization. The nickel hydroxide material may exhibit a FWHM at the <001> peak of 0.91 to 1.25 or greater under standard X-Ray Diffraction characterization. A preferred nickel hydroxide material has a capacity of 1 to 5% and more preferably 1 to 10% greater than theoretical capacity of nickel hydroxide based on a one electron transfer. The nickel hydroxide material preferably has a tap density of 2.00 to 2.35 g/cc, and more preferably 2.20 to 2.35 g/cc. Preferably, the nickel hydroxide material has an average particle size based on volume of 5 to 25 $\mu$m. Preferably, the nickel hydroxide material has a BET surface area of 5-30 $m^2/g$. The nickel hydroxide material preferably has a free moisture content that is 5.0% or less, most preferably a free moisture content that is 2.0% or less.

Positive electrodes formed with nickel hydroxide materials of the present invention are preferably pasted electrodes including one or more additives or binders. The nickel electrode preferably has a loading capacity of 2.2 to 2.8 g/cc.

Nickel hydroxide material including copper may be made by any suitable method. One method that may be particularly suitable is co-precipitation of the copper and nickel and other elements as desired (such as one or more of cobalt, zinc, and magnesium). Co-precipitation methods are generally known and include those disclosed in U.S. Patent No. 6,447,953 issued to Fierro et al. on September 10, 2002, entitled Nickel Hydroxide Electrode Material Exhibiting Improved Conductivity And Engineered Activation Energy, the disclosure of which is herein incorporated by reference. A preferred method of making a co-precipitated nickel hydroxide having copper is by co-precipitating nickel sulfate and copper sulfate in a base and complexing agent.

Preferred process conditions comprise combining a metal sulfate ($MeSO_4$), $NH_4OH$, and NaOH in a single reactor, maintaining the reactor at a constant temperature of 20-100°C (more preferably 40-80°C and most preferably 50-70°C), agitating the combination at a rate of 400-1000 rpm (more preferably 500-900 rpm and most preferably 700-850 rpm), controlling the pH of the agitating mixture at a value in the range of 9-13 (more preferably in the range of 10-12 and most preferably in the range of 10.5-12.0), and controlling both the liquid phase and the vapor phase ammonia concentration.

The $MeSO_4$ solution may be formulated by mixing 3-30 wt%, more preferably 5-25 wt%, and most preferably 7-12 wt% nickel as nickel sulfate with other sulfate solutions, including copper sulfate, and one or more other desired modifiers. Overall the metal sulfate solution added to the reactor may be 0.05 - 6.00M. The $NH_4OH$ solution added to the reactor may be 1-15M, more preferably 5-15M, and most preferably 10-15M solution. The NaOH solution added to the reactor may be 5-50 wt%, more preferably 8-40 wt%, and most preferably 15-30 wt%.

The pH of the mixture in the reactor should be controlled. The control of pH can be accomplished by any appropriate method, preferably through the addition of a base as needed, such as KOH or NaOH. In order to assure optimum contact between the components of the mixture introduced into the reactor, constant mixing or agitation should be provided. Agitation may be provided by any suitable method, such as stirring, agitating, vortexing, ultrasonic, vibration, etc.

Nickel hydroxide formula s found particularly suitable for use in positive electrodes of nickel metal hydride batteries but not all according to the invention are: $(Ni_{94.4}Co_{3.6}Zn_1Cu_1)(OH)_2$; $(Ni_{94.4}CO_{2.6}Zn_2Cu_1)(OH)_2$; $(Ni_{93.4}Co_{3.6}Zn_1Cu_2(OH)_2$; $(Ni_{92.9}Co_{3.6}Zn_2Cu_1Mg_{0.5})(OH)_2$; $(Ni_{94.3}Co_{3.6}Zn_1Cu_1Mg_{0.1})(OH)_2$; $(Ni_{93.46}Co_{3.6}Cu_{1.49}Zn_{1.45})(OH)_2$; $(Ni_{93.05}Co_{2.5}Zn_{1.45}Cu_3)(OH)_2$; $(Ni_{93.7}Co_{2.55}Zn_{2.3}Cu_{1.45})(OH)_2$; $(Ni_{92.2}Co_{2.5}Zn_{2.3}Cu_3)(OH)_2$; $(Ni_{89.9}Co_{2.5}Zn_{4.6}Cu_3)(OH)_2$; $(Ni_{92.05}Co_{2.5}Zn_{1.45}Cu_4)(OH)_2$; $(Ni_{92}Zn_{5.5}Cu_{2.5})(OH)_2$; $(Ni_{92}Co_{1.5}Zn_{5.5}Cu_1)(OH)_2$; $(Ni_{91.5}Co_{1.5}Zn_7)(OH)_2$; $(Ni_{91.5}Co_{2.5}Zn_{1.5}Cu_3Mg_1)(OH)_2$; $(Ni92Co1.5Zn_{1.45}Cu_3Mg_2)(OH)_2$.

**Example**

Samples of nickel hydroxide in accordance with the present invention were prepared and tested. The samples prepared and tested were: Sample 1 - $(Ni_{94.4}Co_{3.6}Zn_1Cu_1)(OH)_2$; Sample 2 - $(Ni_{94.4}Co_{2.6}Zn_2Cu_1)(OH)_2$; Sample 3 - $(Ni_{93.4}CO_{3.6}Zn_1Cu_2)(OH)_2$; Sample 4 - $(Ni_{92.9}Co_{3.6}Zn_2Cu_1Mg_{0.5})(OH)_2$ ; Sample 5 - $(Ni_{94.3}CO_{3.6}Zn_1Cu_1Mg_{0.1})(OH)_2$; Example 6 - $(Ni_{93.46}Co_{3.6}Zn_{1.45}Cu_{1.49})(OH)_2$; Sample 7 - $Ni_{93.05}Co_{2.5}Zn_{1.45}Cu_3(OH)_2$. The samples were prepared in a one reactor process by continuously adding solutions of ammonium hydroxide, sodium hydroxide, nickel sulfate, copper sulfate and one or more sulfates selected from zinc sulfate, magnesium sulfate, and cobalt sulfate. The mixture of solutions were maintained at a pH in the range of 10 to 12 and at a temperature of approximately 60°C. The different modifiers such as copper, magnesium, cobalt, and zinc were co-precipitated with the nickel to form the hydroxide by dissolving their salts in the nickel sulfate solution. The final produce of spherical nickel hydroxide was continuously collected by an overflow on the side of the reactor.

Samples 1-7 were formed into pasted positive electrodes and placed into c-cells for capacity testing. The testing results for Samples 1-7 are shown below in Table 1.

**Table 1**

| rate | Sample | mAh/g Total Electrode | expected Capacity | actual Capacity | mpv | % of nominal capacity | whr |
|---|---|---|---|---|---|---|---|
| 0.1C/0.5C | 1 | 184 | 5.04 | 5.18 | 1.23 | 102.8 | 6.37 |
| | 2 | 173 | 5.22 | 5.06 | 1.24 | 96.9 | 6.27 |
| | 3 | 182 | 4.92 | 5.08 | 1.23 | 103.3 | 6.25 |
| | 4 | 180 | 4.97 | 5.04 | 1.39 | 101.4 | 6.25 |
| | 5 | 184 | 5.05 | 5.19 | 1.24 | 102.8 | 6.44 |
| | 6 | 183 | 5.04 | 5.18 | 1.24 | 103.0 | 6.42 |
| | 7 | 193 | 4.30 | 4.78 | 1.25 | 111.0 | 5.98 |
| 0.1C/0.2C | 1 | | 5.04 | 5.04 | 1.17 | 100.0 | 5.90 |
| | 2 | | 5.22 | 5.01 | 1.19 | 96.0 | 5.96 |
| | 3 | | 4.92 | 5.01 | 1.16 | 101.8 | 5.81 |
| | 4 | | 4.97 | 4.97 | 1.18 | 100.0 | 5.86 |
| | 5 | | 5.05 | 5.11 | 1.18 | 101.2 | 6.03 |
| | 6 | | 5.04 | 5.04 | 1.19 | 100.0 | 6.00 |
| | 7 | | 4.30 | 4.74 | 1.22 | 110.0 | 5.78 |
| 0.1C/1C | 1 | | 5.04 | 4.72 | 1.08 | 93.7 | 5.10 |
| | 2 | | 5.22 | 4.86 | 1.10 | 93.1 | 5.35 |
| | 3 | | 4.92 | 4.68 | 1.06 | 95.1 | 4.96 |
| | 4 | | 4.97 | 4.77 | 1.09 | 96.0 | 5.20 |
| | 5 | | 5.05 | 4.90 | 1.10 | 97.0 | 5.39 |
| | 6 | | 5.04 | 4.82 | 1.11 | 96.0 | 5.35 |
| | 7 | | 4.30 | 4.66 | 1.17 | 108.0 | 5.45 |
| 0.1C/2C | 1 | | 5.04 | 2.02 | 0.93 | 40.1 | 1.88 |
| | 2 | | 5.22 | 2.99 | 0.96 | 57.3 | 2.87 |
| | 3 | | 4.92 | 0.14 | 0.93 | 8.3 | 0.38 |
| | 4 | | 4.97 | 2.47 | 0.95 | 49.7 | 2.35 |
| | 5 | | 5.05 | 2.85 | 0.96 | 56.4 | 2.74 |
| | 6 | | 5.04 | 3.29 | 0.96 | 65.0 | 3.16 |

(continued)

| rate | Sample | mAh/g Total Electrode | expected Capacity | actual Capacity | mpv | % of nominal capacity | whr |
|---|---|---|---|---|---|---|---|
|  | 7 |  | 4.30 | 4.47 | 1.06 | 104.0 | 4.74 |

**Claims**

1. A positive electrode active material having the formula :

$$(Ni_aCo_bZn_cCu_dMg_e) (OH)_2,$$

wherein :

$0.890 \leq a \leq 0.950,$
$0.020 \leq b \leq 0.040,$
$0.005 \leq c \leq 0.055,$
$0.005 \leq d \leq 0.050,$
$0.000 \leq e \leq 0.055;$

and a+b+c+d+e = 1.000.

2. The positive electrode active material according to claim 1, wherein $0.005 \leq d \leq 0.035$.

3. The positive electrode active material according to claim 2, wherein $0.025 \leq d \leq 0.035$.

4. The positive electrode active material according to any one of claims 1 to 3, wherein $0.920 \leq a \leq 0.950$.

5. The positive electrode active material according to any one of claims 1 to 4, wherein $0.005 \leq c \leq 0.025$.

6. The positive electrode active material according to any one of claims 1 to 5, wherein $0.000 \leq e \leq 0.015$.

7. The positive electrode active material according to any one of claims 1 to 6, wherein said nickel hydroxide material has a crystallite size of less than 100 angstroms

8. The positive electrode active material according to any one of claims 1 to 7, wherein said nickel hydroxide material has a tap density of 2.00 to 2.35 g/cc.

9. The positive electrode active material according to claim 8, wherein said nickel hydroxide material has a tap density of 2.20 to 2.35 g/cc.

10. The positive electrode active material according to any one of claims 1 to 9, wherein said nickel hydroxide material has an average particle size based on volume of 5 to 25 $\mu$m.

11. The positive electrode active material according to anyone of claims 1 to 10, wherein said nickel hydroxide material has a BET surface area of 5-30 m$^2$/g.

**Patentansprüche**

1. Positivelektroden-Aktivmaterial mit der Formel:

$$(Ni_aCo_bZn_cCu_dMg_e)(OH)_2,$$

worin

$0,890 \leq a \leq 0,950,$

$0,020 \le b \le 0,040,$
$0,005 \le c \le 0,055,$
$0,005 \le d \le 0,050,$
$0,000 \le e \le 0,055,$ und
a+b+c+d+e=1,000.

**2.** Positivelektroden-Aktivmaterial nach Anspruch 1, **dadurch gekennzeichnet, dass** $0,005 \le d \le 0,035$.

**3.** Positivelektroden-Aktivmaterial nach Anspruch 2, **dadurch gekennzeichnet, dass** $0,025 \le d \le 0,035$.

**4.** Positivelektroden-Aktivmaterial nach einem der Ansprüche 1 bis 3, **dadurch gekennzeichnet, dass** $0,920 \le a \le 0,950$.

**5.** Positivelektroden-Aktivmaterial nach einem der Ansprüche 1 bis 4, **dadurch gekennzeichnet, dass** $0,005 \le c \le 0,025$.

**6.** Positivelektroden-Aktivmaterial nach einem der Ansprüche 1 bis 5, **dadurch gekennzeichnet, dass** $0,000 \le e \le 0,015$.

**7.** Positivelektroden-Aktivmaterial nach einem der Ansprüche 1 bis 6, **dadurch gekennzeichnet, dass** das Nickelhydroxid-Material eine Kristallitengröße von weniger als 100 Ångström hat.

**8.** Positivelektroden-Aktivmaterial nach einem der Ansprüche 1 bis 7, **dadurch gekennzeichnet, dass** das Nickelhydroxid-Material eine Klopfdichte von 2,00 bis 2,35 $g/cm^3$ hat.

**9.** Positivelektroden-Aktivmaterial nach Anspruch 8, **dadurch gekennzeichnet, dass** das Nickelhydroxid-Material eine Klopfdichte von 2,20 bis 2,35 $g/cm^3$ hat.

**10.** Positivelektroden-Aktivmaterial nach einem der Ansprüche 1 bis 9, **dadurch gekennzeichnet, dass** das Nickelhydroxid-Material eine mittlere volumenbezogene Teilchengröße von 5 bis 25 $\mu m$ hat.

**11.** Positivelektroden-Aktivmaterial nach einem der Ansprüche 1 bis 10, **dadurch gekennzeichnet, dass** das Nickelhydroxid-Material eine BET-Oberflächengröße von 5 bis 30 $m^2/g$ hat.

**Revendications**

**1.** Matériau actif d'électrode positive possédant la formule :

$$(Ni_aCo_bZn_cCu_dMg_e) (OH)_2$$

dans laquelle :

$0,890 \le a \le 0,950,$
$0,020 \le b \le 0,040,$
$0,005 \le c \le 0,055,$
$0,005 \le d \le 0,050,$
$0,000 \le e \le 0,055 ;$

et a + b + c + d + e = 1,000.

**2.** Matériau actif d'électrode positive selon la revendication 1, dans lequel $0,005 \le d \le 0,035$.

**3.** Matériau actif d'électrode positive selon la revendication 2, dans lequel $0,025 \le d \le 0,035$.

**4.** Matériau actif d'électrode positive selon l'une quelconque des revendications 1 à 3, dans lequel $0,920 \le a \le 0,950$

**5.** Matériau actif d'électrode positive selon l'une quelconque des revendications 1 à 4, dans lequel $0,005 \le c \le 0,025$.

**6.** Matériau actif d'électrode positive selon l'une quelconque des revendications 1 à 5, dans lequel $0,000 \leq e \leq 0,015$.

**7.** Matériau actif d'électrode positive selon l'une quelconque des revendications 1 à 6, dans lequel ledit matériau d'hydroxyde de nickel présente une taille de cristallite de moins de 100 angstrôms.

**8.** Matériau actif d'électrode positive selon l'une quelconque des revendications 1 à 7, dans lequel ledit matériau d'hydroxyde de nickel possède une masse volumique après tassement de 2,00 à 2,35 g/cm$^3$.

**9.** Matériau actif d'électrode positive selon la revendication 8, dans lequel ledit matériau d'hydroxyde de nickel possède une masse volumique après tassement de 2,20 à 2,35 g/cm$^3$.

**10.** Matériau actif d'électrode positive selon l'une quelconque des revendications 1 à 9, dans lequel ledit matériau d'hydroxyde de nickel possède une taille moyenne de particule basée sur le volume de 5 à 25 $\mu$m.

**11.** Matériau actif d'électrode positive selon l'une quelconque des revendications 1 à 10, dans lequel ledit matériau d'hydroxyde de nickel possède une aire de surface BET de 5 à 30 m$^2$/g.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 60535176 B
- US 5523182 A, Ovshinsky
- US 4551400 A

- US 4728586 A
- US 5536591 A
- US 6447953 B, Fierro